# EUROPEAN PATENT SPECIFICATION

(11) **EP 4 263 645 B1**
(45) Date of publication and mention of the grant of the patent: **28.05.2025**
(21) Application number: 21824409.3
(22) Date of filing: 15.12.2021
(51) Int. Cl.: C08G 18/00, C08G 18/76, C08G 18/16

(54) **THERMOPLASTIC POLYOXAZOLIDINONE HAVING A HIGH TEMPERATURE STABILITY**
THERMOPLASTISCHES POLYOXAZOLIDINON MIT HOHER TEMPERATURSTABILITÄT
POLYOXAZOLIDINONE THERMOPLASTIQUE AYANT UNE STABILITÉ À HAUTE TEMPÉRATURE

(30) Priority: 21.12.2020 EP 20215909
(43) Date of publication of application: 25.10.2023
(73) Proprietor: BASF SE, 67056 Ludwigshafen am Rhein (DE)
(72) Inventor: ELING, Berend, 49448 Lemfoerde (DE); AUFFARTH, Stefan, 49448 Lemfoerde (DE); QUELL, Aggeliki, 67056 Ludwigshafen (DE); WEBER, Martin, 67056 Ludwigshafen (DE)
(74) Representative: BASF IP Association
(86) International application number: PCT/EP2021/085860
(87) International publication number: WO 2022/136046

(56) References cited:
- EP-A1- 3 604 370
- US-A1- 2017 088 659

## Description

The present invention relates to a method for the production of a thermally stable thermoplastic polyoxazolidinone compound comprising the steps of mixing (a) at least one diisocyanate, (b) at least one organic compound having two epoxide groups, (c) at least one catalyst, catalyzing the formation of oxazolidinone groups and (d) optionally at least one solvent to form a polyoxazolidinone, and contacting this polyoxazolidinone with carbon dioxide, wherein the amounts of diisocyanate (a) and organic compound having two epoxide groups (b) are chosen that the resulting polyoxazolidinone has epoxide end groups, and wherein at least 1 % by weight carbon dioxide, based on the total weight of diisocyanate (a) and organic compound having two epoxide groups (b), is contacted with the polyoxazolidinone. In addition, the present application is related to a thermoplastic polyoxazolidinone, obtainable according to a method according to the invention, a method for the production of a molded part comprising the step of melting a polyoxazolidinone obtainable by a process according to the invention, introducing the melt into a mold, cooling the polyoxazolidinone in the mold to temperatures below its melting point and demolding the obtained molded part and a molded part obtained by such a method.

Thermoplastic polyoxazolidinones (POX) are prepared in the reaction of di-epoxy and a di-isocyanate. The polymerization of POX via a solution polymerization is known and for instance described in various relevant patents from Bayer-Covestro published in 2014 and thereafter, for example WO2015/173101, WO2015/173110, WO2015/173111 and WO2018/141743. In general, an excess of epoxy groups is taken so that the polymer is epoxy terminated. The thermal stability of such polymers for example during the process of thermoplastic processing and molding is limited because the epoxide can undergo subsequent crosslinking reactions at higher temperatures.

It was object of the present invention to provide a thermoplastic polyoxazolidinone with improved thermal stability.

The problem of the present invention has been solved by a method for the production of a thermally stable thermoplastic polyoxazolidinone compound comprising the steps of mixing (a) at least one diisocyanate, (b) at least one organic compound having two epoxide groups, (c) at least one catalyst, catalyzing the formation of oxazolidinone groups and (d) optionally at least one solvent to form a polyoxazolidinone and contacting this polyoxazolidinone with carbon dioxide, wherein the amounts of diisocyanate (a) and organic compound having two epoxide groups (b) are chosen that the resulting polyoxazolidinone has epoxide end groups, and wherein at least 1 % by weight carbon dioxide, based on the total weight of diisocyanate (a) and organic compound having two epoxide groups (b), is contacted with the polyoxazolidinone.

The reaction of CO₂ with epoxy results in the formation of carbonate, so upon reacting the epoxy terminated polymer chains with CO₂, carbonate terminated polymers are obtained. As carbonate groups are more stable than epoxy groups the carbonate terminated polymers show improved thermal stability.

A thermoplastic polyoxazolidinone according to the present invention is a polymer comprising at least two, preferably more than 5, more preferably more than 10 and especially preferred more than 50 oxazolidinone groups and which is soluble, preferably in a solvent (d) according to the present invention. Further, the thermoplastic polyoxazolidinone according to the present invention can be processed in a thermoplastic process, this means it is solid at room temperature and can be melted by increase of the temperature and can be re-solidified by reduction of the temperature back to room temperature. In the context of the present invention, a solid has a shore hardness according to DIN EN ISO 868 of preferably greater than 10 shore D, more preferred greater than 30 shore D and particularly greater than 50 shore D. In another preferred embodiment, the molding of the invention has a high Charpy impact strength according to DIN EN ISO 179-1 eU of preferably more than 100KJ/m², more preferred of more than 150 kJ/m² and especially more than 200 kJ/m².

The aliphatic, cycloaliphatic, araliphatic polyfunctional isocyanates known per se and preferably the aromatic polyfunctional isocyanates come into consideration for use as polyisocyanates a). Polyfunctional isocyanates of this type are known per se or are obtainable by methods known per se. Polyfunctional isocyanates may more particularly also be used as mixtures, in which case component a) will accordingly comprise various polyfunctional isocyanates. Polyfunctional isocyanates that come into consideration for use as polyisocyanate have two (hereinafter called diisocyanates) or more than two isocyanate groups per molecule.

Specific examples are: alkylene diisocyanates having from 4 to 12 carbon atoms in the alkylene radical, e.g. dodecane 1,12-diisocyanate, 2-ethyltetramethylene 1,4-diisocyanate, 2-methylpentamethylene 1,5-diisocyanate, tetramethylene 1,4-diisocyanate, and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5-isocyanatomethylcyclo-hexane (IPDI), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures and preferably aromatic polyisocyanates such as tolylene 2,4- and 2,6-diisocyanate and the corresponding isomer mixtures, diphenylmethane 4,4'-, 2,4'- and 2,2'-diisocyanate and the corresponding isomer mixtures, mixtures of diphenylmethane 4,4'- and 2,2'-diisocyanates, polyphenylpolymethylene polyisocyanates, mixtures of diphenylmethane 2,4'-, 4,4'- and 2,2'-diisocyanates and polyphenylpolymethylene polyisocyanates (crude MDI) and mixtures of crude MDI and tolylene diisocyanates.

Of particular suitability are 2,2'-, 2,4'- and/or 4,4'-diphenylmethane diisocyanate (MDI), 1,5-naphthylene diisocyanate (NDI), 2,4- and/or 2,6-tolylene diisocyanate (TDI), 3,3'-dimethylbiphenyl diisocyanate, 1,2-diphenylethane diisocyanate and/or p-phenylene diisocyanate (PPDI), tri-, tetra-, penta-, hexa-, hepta- and/or octamethylene diisocyanate, 2-methylpentamethylene 1,5-diisocyanate, 2-ethylbutylene 1,4-diisocyanate, pentamethylene 1,5-diisocyanate, butylene 1,4-diisocyanate, 1-isocyanato-3,3,5-trimethyl-5-isocyanatomethylcyclohexane (isophorone diisocyanate, IPDI), 1,4- and/or 1,3-bis(isocyanatomethyl)cyclohexane (HXDI), 1,4-cyclohexane diisocyanate, 1-methyl-2,4- and/or -2,6-cyclohexane diisocyanate and 4,4'-, 2,4'- and/or 2,2'-dicyclohexylmethane diisocyanate.

Modified polyisocyanates are also frequently used, i.e., products which are obtained by chemical reaction of organic polyisocyanates and which have at least two reactive isocyanate groups per molecule. Polyisocyanates comprising urea, biuret, allophanate, carbodiimide, isocyanurate, uretdione, carbamate and/or urethane groups may be mentioned in particular, frequently also together with unconverted polyisocyanates.

In an especially preferred embodiment the isocyanate (a) comprises at least 70% by weight, preferably at least 85 % by weight and especially preferred at least 95% by weight of the total weight of the isocyanate (a), of at least one isomer of diphenylmethandiisocyanate and especially of 4,4'-MDI.

The epoxy-containing component b) comprises any desired aliphatic, cycloaliphatic, aromatic and/or heterocyclic compounds including at least two epoxide groups. The preferred epoxides useful as component b) have from 2 to 4, preferably 2, epoxide groups per molecule and an epoxide equivalent weight of 90 to 500 g/eq, preferably 140 to 220 g/eq.

Suitable polyepoxides are for example polyglycidyl ethers of polyhydric phenols, for example of pyrocatechol, resorcinol, hydroquinone, 4,4'-dihydroxydiphenylpropane (bisphenol A), of 4,4'-dihydroxy-3,3'-dimethyldiphenylmethane, of 4,4'-dihydroxydiphenylmethane (bisphenol F), 4,4'-dihydroxydiphenylcyclohexane, of 4,4'-dihydroxy-3,3'-dimethyldiphenylpropane, of 4,4'-dihydroxybiphenyl, from 4,4'-dihydroxydiphenyl sulfone (bisphenol S), of tris(4-hydroxyphenyl)-methane, the chlorination and bromination products of the aforementioned diphenols, of novolacs (i.e., from reaction products of mono- or polyhydric phenols and/or cresols with aldehydes, especially formaldehyde, in the presence of acidic catalysts in the equivalence ratio of less than 1:1), of diphenols obtained by esterifying 2 mol of the sodium salt of an aromatic oxycarboxylic acid with one mole of a dihaloalkane or of a dihalodialkyl ester or of polyphenols obtained by condensation of phenols and long-chain haloparaffins containing at least two halogen atoms. There may further be mentioned: polyepoxide compounds based on aromatic amines and epichlorohydrin, e.g., N-di(2,3-epoxypropyl)aniline, N,N'-dimethyl-N,N'-diepoxypropyl-4,4'-diaminodiphenylmethane, N,N-diepoxypropyl-4-aminophenyl glycidyl ether (cf. GB patents 772 830 and 816 923).

Further possibilities are: glycidyl esters of polybasic aromatic, aliphatic and cycloaliphatic carboxylic acids, for example diglycidyl phthalate, diglycidyl isophthalate, diglycidyl terephthalate, diglycidyl adipate and glycidyl esters of reaction products of 1 mol of an aromatic or cycloaliphatic dicarboxylic anhydride and 1/2 mol of a diol or 1/n mol of a polyol having n hydroxyl groups or diglycidyl hexahydrophthalates, which may optionally be substituted with methyl groups. Glycidyl ethers of polyhydric alcohols, for example of 1,4-butanediol (Araldite^{®} DY-D, Huntsman), 1,4-butenediol, glycerol, trimethylolpropane (Araldite^{®} DY-T/CH, Huntsman), pentaerythritol and polyethylene glycol can likewise be used. Also of interest are triglycidyl isocyanurate, N,N'-diepoxypropyloxyamide, polyglycidyl thioethers of polyhydric thiols, as for example bismercaptomethylbenzene, diglycidyltrimethylene trisulfone, polyglycidyl ethers based on hydantoins.

It is finally also possible to use epoxidation products of polyunsaturated compounds, such as vegetable oils and conversion products thereof. Epoxidation products of di- and polyolefins, such as butadiene, vinylcyclohexane, 1,5-cyclooctadiene, 1,5,9-cyclododecatriene, chain growth addition polymers and interpolymers which still contain epoxidizable double bonds, for example based on polybutadiene, polyisoprene, butadiene-styrene interpolymers, divinylbenzene, dicyclopentadiene, unsaturated polyesters, also epoxidation products of olefins obtainable via Diels-Alder addition and subsequently converted into polyepoxides by epoxidation with percompound or of compounds containing two cyclopentene or cyclohexene rings linked via bridging atoms or bridging atom groups can likewise be used.

Preference according to the present invention for use as component b) is given to the following polyepoxide compounds or mixtures thereof:
Polyglycidyl ethers of polyhydric phenols, in particular of bisphenol A (Araldit^{®} GY250, Huntsman; Ruetapox^{®} 0162, Bakelite AG; Epikote^{®} Resin 162, Hexion Specialty Chemicals GmbH; Eurepox 710, Brenntag GmbH;Araldit^{®} GY250, Hunstman, D.E.R.^{™} 332, The Dow Chemical Company; Epilox^{®} A 18-00, LEUNA-Harze GmbH) or bisphenol F (4,4'-dihydroxydiphenylmethane, Araldit^{®} GY281, Huntsman; Epilox^{®} F 16-01, LEUNA-Harze GmbH; Epilox^{®} F 17-00, LEUNA-Harze GmbH), polyepoxy compounds based on aromatic amines, especially bis(N-epoxypropyl)aniline, N,N'-dimethyl-N,N'-diepoxypropyl-4,4'-diaminodiphenylmethane and N,N-diepoxypropyl-4-aminophenyl glycidyl ether; polyglycidyl esters of cycloaliphatic dicarboxylic acids, especially diglycidyl hexahydrophthalate and polyepoxides from the reaction product of n mol of hexahydrophthalic anhydride and 1 mol of a polyol having n hydroxyl groups (n = integer from 2-6), especially 3 mol of hexahydrophthalic anhydride and one mole of 1,1,1-trimethylolpropane; 3,4-epoxycyclohexylmethyl 3,4-epoxycyclohexanecarboxylate.

Polyglycidyl ethers of bisphenol A and bisphenol F and also of novolacs are very particularly preferable, in particular polyglycidyl ethers of bisphenol F.

Liquid polyepoxides or low-viscosity diepoxides, such as bis(N-epoxypropyl)aniline or vinylcyclohexane diepoxide can in special cases further reduce the viscosity of already liquid polyepoxides or transform solid polyepoxides into liquid mixtures.

In order to obtain high molecular weight polymer the molar amounts of employed epoxy and isocyanate should be close to 1 to 1. According to the invention the amounts of diisocyanate (a) and organic compound having two epoxide groups (b) are chosen that the resulting polyoxazolidinone has epoxide end groups. Preferably at least 80 %, more preferred at least 90 % and especially preferred more than 95% of the terminal groups of the polyoxazolidinone according to the invention are epoxy groups. In principle an excess epoxy is used to obtain an epoxy terminated polymer. In practice, however, some isocyanate groups may become involved in side-reactions during the reaction. To compensate for possible side reactions some additional isocyanate may be used. Therefore component b) is used in an amount corresponding to an equivalents ratio of epoxide groups to isocyanate groups of 1.1 : 1 to 0,9 : 1, preferably of 1.05 : 1 to 095 : 1, more preferably 1.03 : 1 to 0,98 : 1 and most preferably 1.02 : 1 to 1 : 1.

Catalysts (c) to be used in the catalyst component have a pronounced catalyzing effect on the reaction of the compound containing at least one epoxide groups (b) with the polyisocyanates (a). Examples for suitable catalysts are customary amine catalyts as also known for production of polyurethanes. Examples include amidines, such as 2,3-dimethyl-3,4,5,6-tetrahydropyrimidine, tertiary amines, such as triethylamine, tributylamine, triethylenediamine, dimethylcyclohexylamine, dimethyloctylamine, N,N-dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, tetramethyldiaminoethyl ether, bis(N,N-dimethylaminoethyl) ether, bis(dimethylaminopropyl)urea, dimethylpiperazine, 1,2-dimethylimidazole, 1-azabicyclo(3,3,0)octane and preferably 1,4-diazabicyclo(2,2,2)octane. Also suitable are, for example, pentamethyldiethylenetriamine, N-methyl-N'-dimethylaminoethylpiperazine, N,N-diethylethanolamine and also silamorpholine, boron trichloride/tertiary amine adducts and also N-[3-(dimethylamino)propyl]formamide. Further catalysts preferably comprise boron trichloride/tertiary amine adducts, N,N-dimethylbenzylamine and/or N,N-methyldibenzylamine and/or boron trichloro(N,N-dimethyloctylamine).

In addition, these catalysts may comprise incorporable amine catalysts. These include at least one, preferably 1 to 8 and more preferably 1 to 2 isocyanate-reactive groups, such as primary amino groups, secondary amino groups, hydroxyl groups or urea groups. A distinction is made here between amides and amino groups in that, for the purposes of this invention, primary and secondary amides are not referred to as, respectively, primary and secondary amino groups. The incorporable amine catalysts preferably include primary amino groups, secondary amino groups and/or hydroxyl groups. The incorporable amine catalysts preferably include one or more tertiary amino groups as well as the isocyanate-reactive group(s), according to the present invention. Preferably, at least one of the tertiary amino groups of the incorporable catalysts bears at least two aliphatic hydrocarbyl moieties, preferably having 1 to 10 carbon atoms per moiety, more preferably having 1 to 6 carbon atoms per moiety. It is particularly preferable for the tertiary amino groups to bear two moieties each independently selected from methyl, ethyl and any further organic moiety.

Further, the catalyst (c) may comprise a Lewis Acid Catalyst. As used herein, the term "Lewis acid" follows the definition given by IUPAC as a molecular entity (and the corresponding chemical species) that is an electron-pair acceptor and therefore able to react with a Lewis base to form a Lewis adduct, by sharing the electron pair furnished by the Lewis base. Hence, the Lewis acid catalyst may be a metal ion or a metal ion complex within this definition. The corresponding Lewis base that accompanies the Lewis acid catalyst is preferably of low nucleophilicity. Examples include bromide, iodide, tetraphenylborate, hexafluorophosphate, triflate (trifluoromethanesulfonate) and tosylate (p-tolylsulfonate). Particularly preferred nucleophiles are characterised by a low nucleophilicity with a value on the CH3l scale (J. Am. Chem. Soc. 99:24 (1977) 7968) of > 2.0, more preferred of > 4.0.

In a preferred embodiment of the invention the Lewis acid catalyst is selected from the group consisting of Li(I), Rb(I), Cs(I), Ag(I), Au(I), Mg(II), Ca(II), Sr(II), Ba(II), Dy(ll), Yb(II), Cu(II), Zn(II), V(II), Mo(II), Mn(II), Fe(II), Co(ll) Ni(II), Pd(II), Pt(II), Ge(II), Sn(II), Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), AI(III), Ga(III), In(III), TI(III), Ge(III), Ce(rV), Ti(IV), Zr(IV), Hf(IV), Nb(IV), Mo(IV), W(IV), Ir(IV), Pt(IV), Sn(IV), Pb(IV), Nb(V), Ta(V), Bi(V), Mo(VI), W(VI), ionic liquids and compounds represented by the formula [M(R1)(R2)(R3)(R4)]^{+η} Y^{η-} wherein M is nitrogen, phosphorous or antimony, preferred phosphorous, wherein (R1), (R2), (R3), (R4) are independently of one another selected from the group comprising linear or branched alkyl groups containing 1 to 22 carbon atoms, optionally substituted with heteroatoms and/or heteroatom containing substituents, cycloaliphatic groups containing 3 to 22 carbon atoms, optionally substituted with heteroatoms and/or heteroatom containing substituents, C₁ to C₃ alkyl -bridged cycloaliphatic groups containing 3 to 22 carbon atoms, optionally substituted with heteroatoms and/or heteroatom containing substituents and aryl groups containing 6 to 18 carbon atoms, optionally substituted with one or more alkyl groups containing 1 to 10 carbon atoms and/or heteroatom containing substituents and/or heteroatoms, wherein Y is a halide, carbonate, nitrate, sulfate or phosphate anion, more preferred a halide or carbonate and wherein n is an integer of 1, 2 or 3. Preferred ionic liquids which can be used as catalyst (c) are for example the ionic liquids disclosed in WO2018149844. More preferred ionic liquid catalysts are selected from the group, consisting of 1-Ethyl-3-methylimidazolium bromide (EMIM-Br), 1-Ethyl-3-methylimidazolium chloride (EMIM-CI), 1-Ethyl-3-methylimidazolium dicyandiamide (EMIMDICY), 1-Ethyl-3-methylimidazolium iodide (EMIM-I), 1-Ethyl-3-methylimidazolium diethylphosphate (EMIM-DEP), 1-Benzyl-3methylimidazolium chloride (BEMIM-CI), 1-Butyl-1 methylpiperidinium chlorid (BMPM-CI) and mitures of two or more of these ionic liquids.

In a more preferred embodiment of the invention the Lewis acid catalyst is selected from the group consisting of LiCI, LiBr, Sml3 , Pli4SbBr, Ph4 SbCl, Ph4 PBr, Ph4 PCI, Ph3(C6 H4-OCH3 )PBr, Ph3(C6 H4-OCH3 )PCl, Ph3 (C6 H4 F)PCI, 1-Butyl-1methylpiperidinium chloride (BMPM-CI) and Ph3 (C6 H4 F)PBr.

Catalysts are preferably employed in a concentration of 0.001 to 10 wt.-%, more preferably 0.01 to 5 wt.-%, further preferably 0.05 to 3 wt.-% and especially 0.1 to 2 wt.-% as catalyst or catalyst combination, based on the overall weight of components (a) and (b).

As solvent (d) any solvent can be used which does not react with the isocyanates (a) or the epoxides (b) and which has a boiling point of at least 150°C, preferably of 160 to 400 °C and especially preferred 200 to 350 °C. Preferably a high boiling non-protic halogenated aromatic or high-boiling non-protic aliphatic heterocyclic solvent as halogenated aromatic or aliphatic heterocyclic solvent.

Suitable solvents are for example organic solvents such as linear or branched alkanes or mixtures of alkanes, toluene, xylene and the isomeric xylene mixtures, mesitylene, mono or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (MTBE), linear or cyclic ester, or polar aprotic solvents such as 1,4-dioxane, acetonitrile, N,N-dimethylformamide (DMF), N,N- dimethylacetamide (DMAc), dimethylsulfoxid (DMSO), cyclic carbonate, such as ethylencarbonate or propylencarbonate, N-methylpyrrolidone (NMP), 1,3-dimethyl-2-imidazolidinone (DMI), N, N'-Dimethylpropyleneurea (DMPU), sulfolane, tetramethylurea, N,N'-dimethylethylenurea or mixtures of the above mentioned solvents and/or with other solvents. Preferred solvents are N-methylol-2-pyrrolidone, 1,2- dichlorobenzene, 1,3-dimethyl-2-imidazolidinone, sulfolane, N, N'-dimethylpropyleneurea, N, N'-Dimethylethyleneurea, dimethylacetamide (DMAc) or mixtures of two or more thereof, especially preferred 1 ,2-dichlorobenzene, sulfolane, 1,3-dimethyl-2-imidazolidinone N, N'-Dimethylpropyleneurea and/or N-methylpyrrolidone (NMP).

Preferably, the solvent (d) is used in an amount of > 0, preferably 10 to 1000 % by weight, more preferably 50 to 500 % by weight, based on the total weight of reactive components (a) and (b). In a preferred embodiment the amount of solvent is adjusted in a way that the viscosity of the polyoxazolidinone solution is in a range of 100 to 2500 mPas at 23°C. In a preferred embodiment at least part of the solvent is contacted with at least some of the compounds a) to c) before the reaction to form the polyoxazolidinone of the invention has started. For example by dissolving at least one of the components a) to c) fully or partially before starting the mixing step.

In one embodiment of the invention no solvents are applied and polymerization is performed as bulk polymerization. For a bulk polymerization special equipment must be used. Such reactions can be performed in a kneader or an extruder, preferably in a reactive extruder - an extruder type that is commonly utilized in the production of thermoplastic polyurethane. Carbondioxide can then be injected into to the polymer melt. The injection into the polymer melt can be performed within the extruder, preferably during the later stages of the polymerization .

For the process according to the invention the reaction of components (a) (b) and (c) to prepare the polyoxazolidinone according to the invention preferably is performed at a temperature of more than 100 °C to less than 300 °C, preferably of more than 130 °C to less than 280 °C, more preferably of more than 140 to less than 250°C. If temperatures below 100 °C are set, the reaction is generally slow and the isocyanurate formation considerable. At temperatures above 300 °C, the amount of undesirable secondary products increases considerably.

After the start of the formation of polyoxazolidinones by reaction of isocyanates (a) and compound having two epoxide groups (b) the polyoxazolidinone solution produced is contacted with carbon dioxide. According to the present invention preferably the contacting with carbon dioxide is started after a reduction of the isocyanate content by at least 10 %, preferably at least 50 %, more preferably at least 80 % and especially preferred at least 95% of the theoretical isocyanate content of the solution before the reaction started. Contacting can be done by any possible measure. Preferably the contact is intensified by purging carbon dioxide into the oxazolidinone solution or by mixing the carbon dioxide and the polyoxazolidinone solution, for example by vigorous mixing or stirring in carbon dioxide atmosphere. Preferably the contacting with carbon dioxide takes place at a temperature of more than 100 °C to less than 300 °C, preferably of more than 130 °C to less than 280 °C, more preferably of more than 140 to less than 250°C. Alternatively CO₂ can be added to the melt.

For the contacting of the polyoxazolidinone, preferably the polyoxazolidinone solution, with carbon dioxide at least 1 % by weight, preferably 2 to 100 % by weight and more preferably 3 to 50 % by weight of carbon dioxide, based on the total weight of diisocyanate (a) and organic compound having two epoxide groups (b), is contacted with the polyoxazolidinone. Preferably, this results in a polyoxazolidinone which comprises cyclic carbonate end groups. Preferably the contacting of the polyoxazolidinone with CO₂ is conducted until the ratio of cyclic carbonate end groups to epoxide end groups, as measured with NMR-spectroscopy as explained in the Examples section, is more than 1 : 2, more preferred more than 1 : 1 , even more preferred more than 2 : 1 and especially preferred more than 4 : 1. The addition of carbon dioxide is very convenient and can be easily added from a pressurized gas bottle. The addition of an excess of carbon dioxide does not harm as the oxazolidinone groups of the polymer end are not reactive towards carbon dioxide.

In case the polymerization is carried out in bulk, the vessel may be pressurized with CO₂ when the isocyanate and epoxy reaction is largely completed. Pressurization with CO₂ can be conveniently be performed in a reactive extrusion process.

After contacting the polyoxazolidinone solution with carbon dioxide, the polyoxazolidinone is removed from the solution by any known method, for example by precipitation, for example initiated by addition of a polar solvent as methanol and optional subsequent cleaning steps, for example by dropping the polyoxazolidinone solution into a polar liquid as for example water or a mixture of water and polar solvents as methanol, wherein the polar liquid preferably is agitated.

A further embodiment is where the polymer solution is precipitated in the form of beads. The beads can be prepared according to the processes known for the separation of Polyarylethers, described in DE 3644464, EP 2305740, EP 3013889, WO2015/007774, WO2015/007775, WO2015/007776. Due to the different nature of the polyoxazolidinone adjustments compared to the conditions described in the literature might be necessary. Particularly, further washing/extraction can be added to reduce the level of residual solvents after drying below 5000 ppm, preferentially below 2500 ppm. Such adjustments are well known to a person skilled in the art.

The obtained thermoplastic polyoxazolidinone, obtainable according to a method of the invention, comprises cyclic carbonate end groups. Such a thermoplastic polyoxazolidinone is also object of the present invention. This thermoplastic polyoxazolidinone according to the invention has a high thermal stability and can be used in conventional thermoplastic processes as processes comprising the step of melting a polyoxazilodinone obtainable by a process according to the present invention, introducing the melt into a mold, cooling the polyoxazolidinone in the mold to temperatures below its glass transition temperature and demolding the obtained molded part. Due to their improved temperature stability processing is easier and the recycling of the products obtained is improved due to better re-meltability.

The following examples section shall exemplify the present invention:

### Chemicals used:

- Dry 1,3-dimethyl-2-imidazolidinone (DMI), stored over molecular sieve (0.3 nm)
- Bisphenol A diglycidyl ether (BADGE). The epoxy equivalent weight 170.2 g/mol
- Diphenylmethane-4,4'-diisocyanate (MDI). The isocyanate equivalent weight 125.1 g/mol
- Tetraphenylphosphonium bromide (TPPBr)
- 1-Butyl-1methylpiperidinium chloride (BMPM-CI)
- Diglycol bis chloroformate (DIBIS)
- Carbon dioxide (CO₂) - bottle of compressed gas
- 1,2-dichlorobenzene (DCB)
- Irganox 1076

### Synthesis route 1

### Experimental setup:

A 2 L four neck round bottom flask was equipped with a reflux condenser, an electronic thermometer and overhead stirrer. The remaining neck was equipped with a septum. The reactants, catalyst and solvent can either be precharged into the vessel or added using a metering unit via the septum, or a combination of both. As metering units syringe pumps were used. The flask was blanketed under nitrogen and the content of the vessel was stirred continuously. The solvent DMI that was used throughout the work was stabilized with 10 ppm of DIBIS. The catalyst TPPBr was stored under nitrogen. In the calculation of the required amounts of reactants the equivalents were used as given by the supplier.

### Preparation of the solutions for the synthesis

### Catalyst solutions (R1.1)

2.66 g TPPBr was dissolved in 571.9 g DMI at room temperature (K1).

### Reactant mixture solution (R1.2)

A mixture was prepared containing 259.3 g BADGE, 150.0 g DMI and 190.7 g MDI.

### Synthesis

The vessel was charged with 0.6 g of TPPBrand 10 g DMI at 185 °C. R1.1 was fed into the vessel over a period of 4 h. At the time the addition of R1.1 started, the addition of R1.2 was commenced as well. R1.1 was fed into the reactor over a period of 2 h. After the dosing of R1.1 was completed 571.9 g of DMI was fed into the vessel over a period of 2 hrs. During the addition of R1.1, R1.2 and DMI the temperature was kept at 185°C. After the additions were completed the vessel was kept at 185 °C for another 1 h while stirring, thereafter a sample was taken for analysis (sample S1.1). Subsequently CO₂ from a gas cylinder was bubbled underneath the surface of the liquid at a rate of 30 g/h for 4 hrs. Thereafter a sample was taken (S1.2).

### Synthesis route 2

### Experimental setup:

A 4 L vessel was equipped with a reflux condenser, an electronic thermometer, an overhead stirrer and a gas tube. The epoxide, catalyst and DCB were precharged into the vessel and the isocyanate dissolved in DMI was added using a metering unit via one of the necks. As metering unit a membrane pump was used. The vessel was blanketed under nitrogen and the content was stirred continuously. The solvent DMI that was used throughout the work was stabilized with 10 ppm of DIBIS. The catalyst BMPM-CI was stored and handled under nitrogen. In the calculation of the required amounts of reactants the equivalent weights were used as given by the supplier.

### Preparation of the solutions for the synthesis:

### Isocyanate solution (R2.1)

A mixture was prepared containing 1256.6g DMI and 301.12g MDI. (R2.1).

### Synthesis:

The vessel was charged with 2.31g BMPM-CI, 2.15g Irganox 1076, 416.58g BADGE and 416.58g DCB and stirred at 155 °C. After dissolution solution R2.1 was fed into the vessel over a period of 90 min., whereby during the first 60 min. the temperature was kept at 155°C and for the remaining 30 min. the temperature was increased to 190°C. After competition of the addition the temperature was increased to 200°C for 15min followed by a further increase in temperature to 210°C for another 15 min. Subsequently the content was cooled to 170°C and sample S2.1 was taken. Subsequently CO₂ from a gas cylinder was bubbled underneath the surface of the liquid at a rate of 30 g/h for 90min. Sample S2.2 was taken.

### Characterization:

The average molecular weight (Mn and Mw) of the product was determined via size exclusion chromatography (SEC) which was calibrated against PMMAs with an internal toluene standard. The epoxy equivalent weight was determined according to DIN EN ISO 3001. H-NMR (Bruker BioSpin, 400 MHz) was used to quantify the conversion from epoxy into carbonate. The carbonate-H of the formed cyclic carbonate was determined and calibrated against the oxazolidinone-H of the 5-membered oxazolidine-2-on ring.

### Results:

**Table 1: Results with CO₂ treatment from synthesis route 1**

| | Mn average (g/mol) | Mw average (g/mol) | Polydispersity D | Epoxide equivalent (g/mol) |
|---|---|---|---|---|
| S1.1 | 9,500 | 57,000 | 6.0 | 9,800 |
| S1.2 | 9,500 | 54,000 | 5.7 | 26,000 |

The treatment with CO₂ shows an increase in the epoxide equivalent weight of about a factor of 2.6 whereas the molecular weight remained essentially the same.

**Table 2: Results with CO₂ treatment from synthesis route 2.**

| | **Carbonate-H (1H-NMR, 5.11 ppm)** | **Epoxy-H (1H-NMR 2.81 ppm)** | **Viscosity ratio @ 220°C and 0.5 rad/s (5^{th} sweep/1^{st} sweep) in %** |
|---|---|---|---|
| | | | |
| S2.1 | - | 0.05 | 74.6 |
| S2.2 | 0.06 | 0.01 | 25.0 |

The NMR measurement shows high a conversion of the epoxide to the carbonate (The absolute experimental error in the measured absorptions amounts to 0.01).

The positive effect of the endcapping on the melt stability can be demonstrated comparing the viscosity of the polymer melt at 220 °C after several frequency sweeps. The ratio of the viscosities obtained from the first sweep and fifth sweep was taken as a measure to quantify the thermal stability of the polyoxazolidinone S2.1 (without endcapping) and S2.2 (with endcapping). The higher the ratio, the higher the viscosity difference between the first sweep and the fifth sweep and hence the higher the viscosity deviation.

The polymer solution obtained via "synthesis route 2" was cooled to room temperature. The polymer solution at room temperature has a viscosity in the range of 5000 - 8000 mPa s. To prepare the polymer solution for the bead preparation, the viscosity is adjusted to ~ 600 mPa s using additional DMI (solvent from synthesis). The diluted polymer solution is transferred into a 2,5 L bottle. A 4 mm PTFE tubing connects the bottle to a gear pump initiating the flow of the polymer solution through a 1.1 mm thick nozzle into a stirred water bath. The height of the nozzle is 1 m above the water surface. The polymer solution leaves the nozzle in the form of a thin stream which breaks up due to Plateau-Rayleigh instability to fine droplets right before entering the water bath. Inside the water bath, the formed beads are slightly stirred to avoid agglomeration. The beads are stirred for several hours at room temperature. Afterwards, the beads are filtered and put in a methanol bath for two days to dissolve any residual DMI. As a last step, the beads are filtered again and dried at 70°C , 25 mbar, for 12 h in an vacuo oven. Beads were obtained.

### Extrusion of CO₂ endcapped polyoxazolidinone

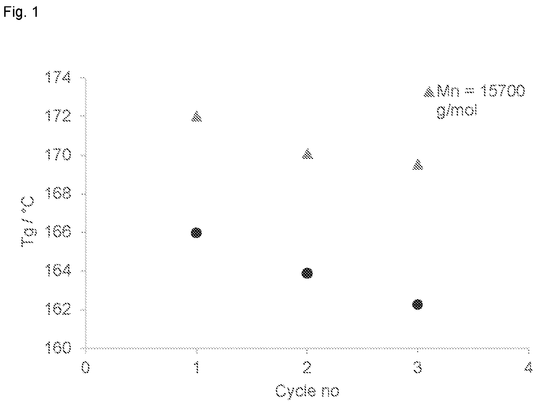

The CO₂ endcapped polyoxazolidinone in bead form was fed into a mini extruder (DSM mini extruder with a melt volume of around 20 ml). The mini extruder was set at a temperature of 220°C. Within 5 min, the polymer melted and was extruded into thin strands (cycle 1). The obtained strands were cut into small pieces and re-fed to the extruder to melt the material a second time and again, obtain it as strands (cycle 2). This process could be repeated for a third time (cycle 3) indicating sufficient polymer melt stability under the present conditions. After every cycle, a small portion of the polymer was taken for a DSC measurement to obtain the glass transition temperature (Tg). Figure 1 shows the Tg as a function of the cycle number. A small decrease in Tg was observed, but no drastic change or increase in the Tg. This proves, that no cross-linking had occurred. Depicted are polyoxazolidinones from two synthesis campaigns that resulted in different molecular weights.

Figure 1: Glass transition temperature (Tg) as a function of extruder cycle numbers for 4 different polyoxazolidinone obtained via synthesis route 2.

## Claims

1. Method for the production of a thermally stable thermoplastic polyoxazolidinone compound comprising the steps of mixing
(a) at least one diisocyanate
(b) at least one organic compound having two epoxide groups,
(c) at least one catalyst, catalyzing the formation of oxazolidinone groups and optionally
(d) at least one solvent
to form a polyoxazolidinone, and contacting this polyoxazolidinone with carbon dioxide, wherein the amounts of diisocyanate (a) and organic compound having two epoxide groups (b) are chosen that the resulting polyoxazolidinone has epoxide end groups and wherein at least 1 % by weight carbon dioxide, based on the total weight of diisocyanate (a) and organic compound having two epoxide groups (b), is contacted with the polyoxazolidinone.

2. Method according to claim 1 **characterized in that** a solvent (d) is used and the polyoxazolidinone formed is dissolved in the solvent (d) in form of a polyoxazolidinone solution and this polyoxazolidinone solution is contacted with carbon dioxide.

3. Method according to claim 1 or claim 2, **characterized in that** the contacting of the polyoxazolidinone solution with carbon dioxide is performed at 130 to 280 °C.

4. Method according to any of claims 1 to 3, **characterized in that** the polyisocyanates (a) comprises at least 70% by weight of the total weight of the isocyanate (a), of at least one isomer of diphenylmethandiisocyanate.

5. Method according to any of claims 1 to 4, **characterized in that** the molar ratio of epoxide groups in the compound having two epoxide groups (b) to isocyanate groups in the diisocyanate (a) is 0.9 : 1 to 1.1 : 1.

6. Method according to any of claims 1 to 5, **characterized in that** compound having two epoxide groups (b) is selected from the group consisting of Polyglycidylether of Bisphenol A, Bisphenol F or Novolak or Mixtures of two or more thereof.

7. Method according to any of claims 1 to 6, **characterized in that** the carbon dioxide is contacted with the polyoxazolidinone solution by purging carbon dioxide into the polyoxazolidinone solution or by mixing the carbon dioxide and the polyoxazolidinone solution.

8. Method according to any of claims 1 to 7, **characterized in that** the solvent (d) is selected from the group consisting of N-methylol-2-pyrrolidone, 1,2- dichlorobenzene, 1,3-dimethyl-2-imidazolidinone, sulfolane, N, N'-dimethylpropyleneurea, N, N'-Dimethyleth-yleneurea, dimethylacetamide or mixtures of two or more thereof.

9. Method according to any of claims 1 to 8, **characterized in that** after contacting the polyoxazolidinon solution with carbon dioxide, the solvent is removed.

10. Thermoplastic polyoxazolidinone, obtainable according to a method as claimed in any of the claims 1 to 9.

11. Method for the production of a molded part comprising the step of melting a polyoxazilodinone obtainable by a process according to claim 10, introducing the melt into a mold, cooling the polyoxazolidinone in the mold to temperatures below its melting point and demolding the obtained molded part.

12. Molded part obtainable by a method according to claim 11.

## Patentansprüche

1. Verfahren zur Herstellung einer wärmestabilen thermoplastischen Polyoxazolidinonverbindung, umfassend die Schritte des Mischens von:
(a) mindestens einem Diisocyanat,
(b) mindestens einer organischen Verbindung mit zwei Epoxidgruppen,
(c) mindestens einem Katalysator, der die Bildung von Oxazolidinongruppen katalysiert, und gegebenenfalls
(d) mindestens einem Lösungsmittel,
zur Bildung eines Polyoxazolidinons, und Kontaktieren dieses Polyoxazolidinons mit Kohlendioxid, wobei die Mengen an Diisocyanat (a) und organischer Verbindung mit zwei Epoxidgruppen (b) so gewählt werden, dass das resultierende Polyoxazolidinon Epoxidendgruppen aufweist, und wobei mindestens 1 Gew.% Kohlendioxid, bezogen auf das Gesamtgewicht des Diisocyanats (a) und der organischen Verbindung mit zwei Epoxidgruppen (b), mit dem Polyoxazolidinon kontaktiert wird.

2. Verfahren nach Anspruch 1, **dadurch gekennzeichnet, dass** ein Lösungsmittel (d) verwendet wird und das gebildete Polyoxazolidinon in dem Lösungsmittel (d) in Form einer Polyoxazolidinonlösung gelöst wird und diese Polyoxazolidinonlösung mit Kohlendioxid kontaktiert wird.

3. Verfahren nach Anspruch 1 oder Anspruch 2, **dadurch gekennzeichnet, dass** das Kontaktieren der Polyoxazolidinonlösung mit Kohlendioxid bei 130 bis 280 °C durchgeführt wird.

4. Verfahren nach einem der Ansprüche 1 bis 3, **dadurch gekennzeichnet, dass** die Polyisocyanate (a) mindestens 70 Gew.% des Gesamtgewichts des Isocyanats (a) von mindestens einem Isomer von Diphenylmethandiisocyanat umfassen.

5. Verfahren nach einem der Ansprüche 1 bis 4, **dadurch gekennzeichnet, dass** das molare Verhältnis von Epoxidgruppen in der Verbindung mit zwei Epoxidgruppen (b) zu Isocyanatgruppen in dem Diisocyanat (a) 0,9:1 bis 1,1:1 beträgt.

6. Verfahren nach einem der Ansprüche 1 bis 5, **dadurch gekennzeichnet, dass** die Verbindung mit zwei Epoxidgruppen (b) ausgewählt ist aus der Gruppe bestehend aus Polyglycidylether von Bisphenol A, Bisphenol F oder Novolak oder Mischungen von zwei oder mehr davon.

7. Verfahren nach einem der Ansprüche 1 bis 6, **dadurch gekennzeichnet, dass** das Kohlendioxid mit der Polyoxazolidinonlösung kontaktiert wird, indem Kohlendioxid in die Polyoxazolidinonlösung gespült wird oder indem das Kohlendioxid und die Polyoxazolidinonlösung gemischt werden.

8. Verfahren nach einem der Ansprüche 1 bis 7, **dadurch gekennzeichnet, dass** das Lösungsmittel (d) ausgewählt ist aus der Gruppe bestehend aus N-Methylol-2-pyrrolidon, 1,2-Dichlorbenzol, 1,3-Dimethyl-2-imidazolidinon, Sulfolan, N,N'-Dimethylpropylenharnstoff, N,N'-Dimethylethylenharnstoff, Dimethylacetamid oder Mischungen von zwei oder mehr davon.

9. Verfahren nach einem der Ansprüche 1 bis 8, **dadurch gekennzeichnet, dass** nach dem Kontaktieren der Polyoxazolidinonlösung mit Kohlendioxid das Lösungsmittel entfernt wird.

10. Thermoplastisches Polyoxazolidinon, erhältlich nach einem Verfahren wie in einem der Ansprüche 1 bis 9 beansprucht.

11. Verfahren zur Herstellung eines Formteils, umfassend den Schritt des Schmelzens eines Polyoxazolidinons, das nach einem Prozess nach Anspruch 10 erhältlich ist, des Einbringens der Schmelze in ein Formwerkzeug, des Abkühlens des Polyoxazolidinons in dem Formwerkzeug auf Temperaturen unterhalb seines Schmelzpunkts und des Entformens des erhaltenen Formteils.

12. Formteil, das nach einem Verfahren nach Anspruch 11 erhältlich ist.

## Revendications

1. Procédé pour la production d'un composé de polyoxazolidinone thermoplastique thermiquement stable comprenant les étapes de mélange
(a) d'au moins un diisocyanate
(b) d'au moins un composé organique ayant deux groupes époxyde,
(c) d'au moins un catalyseur, catalysant la formation de groupes oxazolidinone et éventuellement
(d) d'au moins un solvant
pour former une polyoxazolidinone, et la mise en contact de cette polyoxazolidinone avec du dioxyde de carbone, les quantités de diisocyanate (a) et de composé organique ayant deux groupes époxyde (b) étant choisies de sorte que la polyoxazolidinone résultante possède des groupes terminaux époxyde et, au moins 1 % en poids de dioxyde de carbone, sur la base du poids total de diisocyanate (a) et de composé organique ayant deux groupes époxyde (b), étant mis en contact avec la polyoxazolidinone.

2. Procédé selon la revendication 1 **caractérisé en ce qu'**un solvant (d) est utilisé et la polyoxazolidinone formée est dissoute dans le solvant (d) sous forme d'une solution de polyoxazolidinone et cette solution de polyoxazolidinone est mise en contact avec du dioxyde de carbone.

3. Procédé selon la revendication 1 ou la revendication 2, **caractérisé en ce que** la mise en contact de la solution de polyoxazolidinone avec du dioxyde de carbone est réalisée à une température de 130 à 280 °C.

4. Procédé selon l'une quelconque des revendications 1 à 3, **caractérisé en ce que** les polyisocyanates (a) comprennent au moins 70 % en poids du poids total de l'isocyanate (a), d'au moins un isomère de diisocyanate de diphénylméthane.

5. Procédé selon l'une quelconque des revendications 1 à 4, **caractérisé en ce que** le rapport molaire de groupes époxyde dans le composé ayant deux groupes époxyde (b) sur les groupes isocyanate dans le diisocyanate (a) est de 0,9 : 1 à 1,1 : 1.

6. Procédé selon l'une quelconque des revendications 1 à 5, **caractérisé en ce que** le composé ayant deux groupes époxyde (b) est choisi dans le groupe constitué par un éther de polyglycidyle de bisphénol A, bisphénol F ou novolaque ou des mélanges de deux ou plus de ceux-ci.

7. Procédé selon l'une quelconque des revendications 1 à 6, **caractérisé en ce que** le dioxyde de carbone est mis en contact avec la solution de polyoxazolidinone en purgeant du dioxyde de carbone dans la solution de polyoxazolidinone ou en mélangeant le dioxyde de carbone et la solution de polyoxazolidinone.

8. Procédé selon l'une quelconque des revendications 1 à 7, **caractérisé en ce que** le solvant (d) est choisi dans le groupe constitué par la N-méthylol-2-pyrrolidone, le 1,2-dichlorobenzène, la 1,3-diméthyl-2-imidazolidinone, le sulfolane, la N,N'-diméthylpropylèneurée, la N,N'-diméthyléthylèneurée, le diméthylacétamide ou des mélanges de deux ou plus de ceux-ci.

9. Procédé selon l'une quelconque des revendications 1 à 8, **caractérisé en ce qu'**après la mise en contact de la solution de polyoxazolidinone avec du dioxyde de carbone, le solvant est éliminé.

10. Polyoxazolidinone thermoplastique, pouvant être obtenue selon un procédé tel que revendiqué dans l'une quelconque des revendications 1 à 9.

11. Procédé pour la production d'une pièce moulée comprenant l'étape de fusion d'une polyoxazolidinone pouvant être obtenue par un processus selon la revendication 10, introduction de la masse fondue dans un moule, refroidissement de la polyoxazolidinone dans le moule jusqu'à des températures inférieures à son point de fusion et démoulage de la pièce moulée obtenue.

12. Pièce moulée pouvant être obtenue par un procédé selon la revendication 11.
